(19) Europäisches Patentamt

European Patent Office

Office européen des brevets

(11) **EP 0 985 698 A1**

(12) **EUROPÄISCHE PATENTANMELDUNG**

(43) Veröffentlichungstag:
15.03.2000 Patentblatt 2000/11

(51) Int. Cl.[7]: **C08G 77/46**

(21) Anmeldenummer: **99114288.6**

(22) Anmeldetag: **29.07.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **11.08.1998 DE 19836260**

(71) Anmelder: **Wacker-Chemie GmbH**
**81737 München (DE)**

(72) Erfinder:
• **Rautschek, Holger, Dr.**
**01612 Nünchritz (DE)**
• **Spitzner, Hartmut, Dr.**
**01277 Dresden (DE)**

(74) Vertreter:
**Budczinski, Angelika et al**
**c/o Wacker-Chemie GmbH,**
**Hanns-Seidel-Platz 4**
**81737 München (DE)**

(54) **Lineare Polyether-Polysiloxan-Copolymere, deren Herstellung und Verwendung**

(57) Die vorliegende Erfindung betrifft lineare Polyether-Polysiloxan-Copolymere der allgemeinen Formel $A(BC)_nBA$, in welchen lineare Polyether- und lineare Polysiloxan-Einheiten über Si-C-Bindungen verknüpft sind.

**EP 0 985 698 A1**

**Beschreibung**

Die vorliegende Erfindung betrifft lineare Polyether-Polysiloxan-Copolymere, in welchen lineare Polyether- und lineare Polysiloxan-Einheiten über Si-C-Bindungen verknüpft sind. Die erfindungsgemäßen Copolymere sind vielfältig einsetzbar und können beispielsweise als Additive für Beschichtungen oder als Emulsionsstabilisatoren verwendet werden.

Es sind eine Vielzahl von Verbindungsklassen an Polyether-Polysiloxan-Copolymeren bekannt, wobei die Eignung des einzelnen Copolymertyps in einer speziellen Anwendung maßgeblich von der Struktur der Polysiloxan- und Polyether-Einheiten, deren Verhältnis und Anordnung zueinander sowie der Art der Verknüpfung abhängen. Man kann dabei u. a. in Verknüpfung der Einheiten durch Si-O-C-Bindung oder durch Si-C-Bindung unterscheiden.

Die Herstellung von durch Si-O-C-Bindung verknüpften Polysiloxan-Polyether-Copolymeren erfolgt bekanntermaßen durch Umsetzung von OH-terminierten Polyethern mit z. B. Halogen-, Hydroxy-, Alkoxy- oder Acetoxy-Gruppen enthaltenden Siloxanen (vgl. W. Noll, "Chemie und Technologie der Silicone", Verlag Chemie, 1968, S. 321). Diese Polyether-Polysiloxan-Copolymere sind bekannt und kommerziell verfügbar.

Si-C-verknüpfte Polysiloxan-Polyether-Copolymere können beispielsweise durch Umsetzung von alkenylhaltigen Polyethern mit Si-H-gruppenhaltigen Polysiloxanen unter Zuhilfenahme eines die Umsetzung von Alkenylverbindungen mit Si-H-Bindungen beschleunigenden Stoffes, z. B. Pt-Katalysatoren, erhalten werden. So beschreibt US 5,625,023 Verbindungen, welche die Bildung von Aerosolen in schnell aufgebrachten Beschichtungen auf Siliconbasis verhindern sollen. Diese Verbindungen werden erhalten, indem eine Organohydrogensiliciumverbindung mit einer Oxyalkylenverbindung, einem Katalysator und einem einwertigen olefinischen Alkohol umgesetzt wird. Die Umsetzung kann dabei u. a. durch Hydrosilylierung bzw. Additionsreaktion der seit-und/oder endständigen SiH-Gruppen an die mit Alkenylgruppen beidseitig terminierten Polyether erfolgen, wobei Si-C-Bindungen zwischen Polyether und Siloxan entstehen. Die Verwendung von Siliciumverbindungen mit Si-H-Seitengruppen führt zu verzweigten Copolymeren. Mit dem beschriebenen Verfahren ist es nicht möglich, ausschließlich lineare Polyether-Polysiloxan-Copolymere einer definierten Molekülgröße herzustellen.

In EP 643 329 wird eine Vielzahl an Polyoxyalkylen-Polysiloxan-Blockcopolymeren für flüssige strahlungshärtbare Zusammensetzungen beansprucht. In der allgemeinen Formel (II) sind Si-C-Bindungen zwischen Polyether- und Polysiloxan-Einheiten vorhanden, wobei eine Polysiloxaneinheit als Block in der Molekülmitte von Polyethergruppierungen begrenzt wird und nicht mehrere Blöcke bzw. Einheiten statistisch über das Molekül verteilt sind.

DE 30 11 304 sowie DE 31 23 103 beschreiben Entschäumerformulierungen zur Verwendung in wäßrigen Dispersionen und Lösungen von Kunstharzen, die frei von mineralischen Oxiden, wie $SiO_2$ und $Al_2O_3$, sind und Polysiloxan-Polyether-Blockpolymerisate enthalten. Diese Polymeren aus alternierenden Polysiloxan- und Polyether-Einheiten sind sowohl über Si-C-, als auch über Si-O-C-Bindungen verknüpft. Weiterhin beschreibt DE 38 07 247 die Verwendung von Polyoxyalkylen-Polysiloxan-Blockmischpolymerisaten zur Entschäumung wäßriger Dispersionen, wobei die Verknüpfung von Polysiloxan und Polyoxyalkylen ausschließlich über Si-O-C-Bindungen realisiert wird.

Polysiloxan-Polyether-Blockmischpolymere, bei welchen Polyether- und Polysiloxan-Einheiten über Si-O-C-Bindungen verknüpft sind, haben den Nachteil, daß diese Verknüpfungsstelle in Anwesenheit von Verbindungen mit freien Wasserstoffatomen, wie z. B. Alkoholen, Polyolen oder Wasser, gespalten werden können (vlg. W. Noll, "Chemie und Technologie der Silicone", Verlag Chemie, 1968, S. 323), wobei die Spaltung insbesondere durch Anwesenheit saurer oder basischer Verbindungen erheblich beschleunigt wird. So kommt es in wäßrigen Systemen zur Hydrolyse und in alkoholischen Systemen zur Alkoholyse der Polysiloxan-Polyether-Blockmischpolymerisate. Dieser Effekt tritt insbesondere während der Lagerung von Formulierungen, die solche Polysiloxan-Polyether-Blockmischpolymere und Verbindungen mit freien Wasserstoffatomen enthalten, auf und führt damit zu einer unerwünschten negativen Veränderung der Eigenschaften.

Aufgabe der vorliegenden Erfindung war es, lineare Polyether-Polysiloxan-Copolymere bereitzustellen, in welchen lineare Polyether- und lineare Polysiloxan-Einheiten über Si-C-Bindungen verknüpft sind, sowie Verfahren zu deren Herstellung. Die erfindungsgemäßen Polymere sollen auch bei Anwesenheit von Verbindungen mit freien Wasserstoffatomen stabil sein und Verwendung finden als Schaumstabilisator, Entschäumer und/oder in entschäumend wirkenden Formulierungen, als Additiv für lösemittelhaltige, lösemittelarme und lösemittelfreie wäßrige Beschichtungen, Bauchemikalien, Pasten und anderen Zubereitungen, und/oder als Emulsionsstabilisatoren.

Gegenstand der Erfindung sind lineare Polyether-Polysiloxan-Copolymere, in welchen lineare Polyether- und lineare Polysiloxan-Einheiten über Si-C-Bindungen verknüpft sind und die der allgemeinen Formel

$$A(BC)_nBA \qquad\qquad (I),$$

entsprechen, in welcher $n \geq 1$, vorzugsweise 1 bis 20, ist und
A eine Gruppierung der allgemeinen Formel

$$R^1\text{-O-}[CH_2CH_2O]_a[CH_2CH(CH_3)O]_b[CH_2CH(CH_2CH_3)O]_c\text{-}(C_mH_{2m})\text{-} \hspace{3cm} (II),$$

wobei $R^1$ unabhängig voneinander entweder Wasserstoff, Alkyl, Aralky, Aryl oder ein $R^2$-C(O)-Rest und $R^2$ ein substituierter oder unsubstituierter Alkylrest mit 1 bis 8 Kohlenwasserstoffatomen ist, m Werte zwischen 3 und 8 annimmt und a, b und c unabhängig voneinander Werte zwischen 0 und 200 annehmen, mit der Maßgabe, daß die Summe (a+b+c) 2 bis 300 beträgt, B eine Gruppierung der allgemeinen Formel

$$\text{-}(R^3{}_2Si\text{-O})_d\text{-}R^3{}_2Si\text{-} \hspace{3cm} (III),$$

wobei $R^3$ unabhängig voneinander substituierte und/oder unsubstituierte, gesättigte und/oder ungesättigte Kohlenwasserstoffreste mit 1 bis 20 Kohlenstoffatomen ist und d Werte zwischen 1 und 400 annimmt,
und C ein Gruppierung der allgemeinen Formel

$$\text{-}(C_mH_{2m})\text{-O-}[CH_2CH_2O]_a[CH_2CH(CH_3)O]_b[CH_2CH(CH_2CH_3)O]_c\text{-}(C_mH_{2m})\text{-} \hspace{2cm} (IV),$$

wobei m, a, b, und c die oben angegebenen Werte aufweisen, bedeuten.

Im erfindungsgemäßen linearen Polyether-Polysiloxan-Copolymeren erfolgt die Bindung der Polyether- an die Diorganopolysiloxan-Einheiten über die -$(C_mH_{2m})$-Gruppe, welche linear oder verzweigt sein kann und aus 3 bis 8, vorzugsweise 3 bis 6 Kohlenstoffatomen besteht.

In der allgemeinen Formel (I) stellt die Gruppierung A eine Polyethereinheit der allgemeinen Formel (II) dar, die dadurch gekennzeichnet ist, daß sie mindestens aus zwei Polyoxyalkyleneinheiten und üblicherweise nicht mehr als 200 Polyoxyalkyleneinheiten aufgebaut ist, vorzugsweise nehmen in der allgemeinen Formel (II) m Werte zwischen 3 und 6, a und b Werte zwischen 0 und 40 sowie c Werte zwischen 0 und 30 mit der Maßgabe an, daß die Summe (a+b+c) 2 bis 60 ist. Die Polyoxyalkyleneinheiten können dabei aus der Polymerisation von Ethylenoxid und/oder Propylenoxid und/oder Butylenoxid stammen. Die Ethylenoxid-, Propylenoxid- und Butylenoxideinheiten können dabei sowohl statistisch verteilt, als auch als Blockcopolymerisate vorliegen. Die Polyethereinheit der allgemeine Formel (II) kann jedoch ebenso aus nur einem Alkylenoxid oder einem Copolymerisat von zwei der genannten Alkylenoxide aufgebaut sein. Die Polyether- oder Polyoxyalkyleneinheit A ist durch die Gruppe $R^1$ abgeschlossen. Die Art dieser Gruppe ist für die erfindungsgemäßen Zwecke nicht kritisch. So kann die Polyethereinheit durch eine Hydroxylgruppe ($R^1$ ist ein Wasserstoffatom), durch eine Ethergruppe ($R^1$ ist ein einwertiger, geradkettiger, oder verzweigter Alkylrest, Aralkylrest oder auch Arylrest, wie z.B. Methyl, Ethyl, n-Propyl, i-Propyl, Butyl, Hexyl, Decyl, Dodecyl, 2-Phenylethyl, Phenyl) oder eine Carboxylgruppe in Form eines Esters (wie z.B. Acetyl), aber auch durch eine Kohlensäuregruppe oder durch eine Isocyanatgruppe abgeschlossen sein.

Die Gruppierung B in der allgemeinen Formel (I) ist eine lineare Diorganopolysiloxaneinheit der allgemeinen Formel (III), welche aus mindestens zwei Diorganosiloxyeinheiten und maximal 400 Diorganosiloxyeinheiten, bevorzugt von 4 bis 80 Diorganosiloxyeinheiten, stärker bevorzugt von 6 bis 30 Diorganosiloxyeinheiten, besteht, wobei die Bindung der Diorganopolysiloxaneinheiten an die Polyethereinheiten der allgemeinen Formeln (II) oder (IV) über Si-C-Bindungen erfolgt. Der Substituent $R^3$ in den Diorganopolysiloxan-Einheiten kann ein beliebiger, verzweigter und/oder linearer, substituierter und/oder unsubstituierter, gesättigter und/oder ungesättigter Kohlenwasserstofftest mit 1 bis 20 Kohlenstoffatomen sein. Bevorzugt als Reste $R^3$ sind Alkylreste mit 1 bis 6 Kohlenstoffatomen, wie Methyl, Ethyl, n-Propyl, i-Propyl, Butyl oder Hexyl, aber auch längerkettige Reste, wie Octyl, Decyl, Dodecyl, Octadecyl, können gebunden sein, besonders bevorzugt sind Methylgruppen. Weiterhin können die Alkylgruppen durch Halogene oder andere Substituenten modifiziert sein, wie z. B. 3,3,3-Trifluorpropyl, Chlormethyl, ein gesättigtes oder ungesättigtes, aus Kohlenstoff und Wasserstoff aufgebautes Ringsystem, wie z. B. Cyclopentyl, Cyclohexyl, Cyclooctenyl, eine Arylgruppe, wie z. B. Phenyl, 4-Chlorphenyl, 4-Methylphenyl.

Die in der allgemeinen Formel (I) angebene Gruppierung C entspricht der allgemeinen Formel (IV) und stellt eine beliebige, lineare Polyethereinheit dar, die am Kettenanfang und am Kettenende über eine Si-C-Bindung an eine Diorganopolysiloxaneinheit gebunden ist. Die Bindung an die Diorganopolysiloxaneinheiten erfolgt dabei analog der Bindung zur Gruppierung A über Alkylengruppen mit 3 bis 8 Kohlenstoffatomen. Die Polyethereinheit der allgemeinen Formel (IV) ist dadurch gekennzeichnet, daß sie mindestens aus zwei Polyoxyalkyleneinheiten und üblicherweise nicht mehr als 300 Polyoxyalkyleneinheiten aufgebaut ist, vorzugsweise nehmen in der allgemeinen Formel (IV) m Werte zwischen 3 und 6, a und b Werte zwischen 0 und 120 sowie c Werte zwischen 0 und 30 an, mit der Maßgabe daß die Summe (a+b+c) 2 bis 120 beträgt. Die Polyoxyalkyleneinheiten können dabei aus der Polymerisation von Ethylenoxid und/oder Propylenoxid und/oder Butylenoxid stammen. Die Ethylenoxid-, Propylenoxid- und Butylenoxideinheiten können dabei sowohl statistisch verteilt, als auch als Blockcopolymerisate vorliegen. Die Polyethereinheit C kann ebenso aus nur einem Alkylenoxid, z. B. nur Ethylenoxid oder nur Propylenoxid, oder einem Copolymerisat von zwei der genannten Alkylenoxide, z. B. Ethylenoxid und Propylenoxid, aufgebaut sein.

Der Wert n in Formel (I) sollte durchschnittlich mindestens größer/gleich 1 sein, ist aber ansonsten unkritisch.

Die Zahl n sollte also in Abhängigkeit vom späteren Anwendungszweck gewählt werden.

Ein weiterer Gegenstand der Erfindung ist die Herstellung der Polyether-Polysiloxan-Copolymere der allgemeinen Formel (I) durch Umsetzung von

(a) Polyethern mit einer $R^1$- und einer Alkenyl-Endgruppe der allgemeinen Formel

$$R^1\text{-O-}[CH_2CH_2O]_a[CH_2CH(CH_3)O]_b[CH_2CH(CH_2CH_3)O]_c\text{-}(C_mH_{2m-1}) \qquad (V),$$

(b) Diorganopolysiloxanen mit SiH-Endgruppen der allgemeinen Formel

$$H\text{-}(R^3_2Si\text{-}O)_d\text{-}R^3_2Si\text{-}H \qquad (VI)$$

und

(c) Polyethern mit Alkenyl-Endgruppen der allgemeinen Formel

$$(C_mH_{2m-1})\text{-O-}[CH_2CH_2O]_a[CH_2CH(CH_3)O]_b[CH_2CH(CH_2CH_3)O]_c\text{-}(C_mH_{2m-1}) \qquad (VII),$$

wobei $R^1$, $R^3$, a, b, c, d und m die oben angegebene Bedeutung aufweisen,
in Gegenwart einer Hydrosilylierungsreaktionen katalysierenden Verbindung (d) bei Temperaturen von 20 bis 300°C.

Die zur Bildung der Gruppierungen A und C in der allgemeinen Formel (I) notwendigen Alkenylpolyether (a) bzw. (c) sind z. B. durch basenkatalysierte, auf Allylalkohol gestartete Polymerisation von Ethylen-, Propylen- und/oder Butylenoxid und anschließendem Abbruch durch Alkenylchlorid oder Alkylchlorid bzw. Wasser (Gruppierung C) und Neutralisation des Katalysators synthetisierbar. Derartige Alkenylpolyether sind bekannt und kommerziell verfügbar.

Die zur Bildung der Gruppierung B in Formel (I) notwendigen linearen, Si-H-terminierten Diorganopolysiloxane (b) der allgemeinen Formel (VI) sind z. B. durch Equilibrierung von 1,3-Dihydrotetramethyldisiloxan mit cyclischen Siloxanen in Gegenwart von die Siloxanequilibrierung beschleunigenden Katalysatoren und anschließender Entflüchtigung herstellbar. Derartige lineare, α,ω-SiH-funktionelle Diorganopolysiloxane sind ebenfalls dem Fachmann bekannt und kommerziell verfügbar.

Die erfindungsgemäßen linearen Polyether-Polysiloxan-Copolymere werden durch Umsetzung der angeführten Verbindungen (a), (b) und (c) in Gegenwart eines Katalysators (d) und bei erhöhten Temperaturen hergestellt. Die Reaktion erfolgt durch Hydrosilylierung bzw. Addition der Si-H-Bindung an die Doppelbindung der terminalen $(C_mH_{2m-1})$-Gruppe, wobei sich die Molekülgröße über das Mengenverhältnis der Verbindungen der allgemeinen Formeln (VI) und (VII) zu der Verbindung der allgemeinen Formel (V) regelt. Der Polyether der allgemeinen Formel (V) wirkt dabei als Kettenstopper.

Der Syntheseweg der Hydrosilylierung ist bekannt (vgl. W. Noll, "Chemie und Technologie der Silicone", Verlag Chemie, 1968, S. 48 und 321; Ojima, I. "The Hydrosilylation Reaction" in "The Chemistry of Oganic Silicon Compounds", J.Wiley & Sons Ltd., 1989). Als Katalysatoren sind bevorzugt: Verbindungen oder Komplexe der Metalle der 8. Nebengruppe des Periodensystems der Elemente, insbesondere des Platins und des Rhodiums, z. B. die als Speier-Katalysator bekannten Platin-Verbindung (Hexachloroplatinsäure gelöst in i-Propanol), mit oder ohne Zusatz von Lösemitteln; der sog. Lamoreaux-Katalysator (Hexachloroplatinsäure in Ethanol) oder die Gruppe der Karstedt-Katalysatoren (Vinylsiloxan-Platin-Komplexe), aber auch der Wilkinson-Katalysator (Vinylsiloxan-Platin-chloro-triphenylphosphin-Komplex). Es ist möglich den Hydrosilylierungskatalysator auf einem Träger zu fixieren, z. B. in kolloidaler Form auf Aktivkohle. Weiterhin können zur Steuerung der Reaktionsgeschwindigkeit bekannte Inhibitoren, wie Alkinole eingesetzt werden. Die Hydrosilylierungskatalysatoren werden in Konzentrationen von 0,1 bis 100 ppm, bevorzugt 2 bis 50 ppm, besonders bevorzugt von 4 bis 20 ppm, bezogen auf die Gesamtmenge an Ausgangsstoffen, eingesetzt.

Zur Umsetzung werden die linearen, α,ω-$R^1$,alkenyl-funktionellen Polyethern (a) mit den linearen α,ω-SiH-funktionellen Diorganopolysiloxane (b), den linearen, α,ω-alkenyl-fünktionellen Polyethern (c) und dem Hydrosilylierungskatalysator (d) vermischt. Die Reihenfolge der Zugabe ist meist nicht wesentlich. Sind die Verbindung (a), (b) und (c) nicht untereinander mischbar bzw. ist die Mischviskosität zu hoch, ist es sinnvoll, ein Lösungsmittel oder auch einen Lösungsvermittler einzusetzen. Dazu werden die alkenylgruppenhaltigen Polyether (a) und (c) in einer Lösung eines aprotischen Lösemittels, z. B. Benzen, Toluen, Xylen oder gesättigte Kohlenwasserstoffe, vorgelegt und das SiH-funktionelle Diorganopolysiloxan (b), ggf. ebenfalls gelöst, sowie der Hydrosilylierungskatalysator (d) zugegeben. Die Zusätze und Lösemittel dürfen den Reaktionsverlauf nicht negativ beeinflussen. Insbesondere aromatischen Lösungsmittel wie Toluen sind für die Durchführung von Hydrosilylierungsreaktionen geeignet. Eine bevorzugte Ausführungsform ist die Umsetzung in Gegenwart von Lösemittel, wobei vor Zugabe des Diorganopolysiloxans die Lösung zum Rückfluß erwärmt und gegebenenfalls enthaltenes Wasser azeotrop abgetrennt wird. Nach erfolgter Hydrosilylierung sollte das Lösemittel entfernt werden.

Das Gewichtsverhältnis von (a) zu (b) und (c) ist abhängig vom gewünschten Copolymer der allgemeinen Formel (I). Es ist im allgemeinen bevorzugt ein equimolares Verhältnis von siliciumgebundenen Wasserstoffatomen zu Alkenylgruppen zu wählen. Weiterhin ist bevorzugt in der Synthese der erfindungsgemäß Copolymere die Verbindungen (a) und (c) im Überschuß einzusetzen. Das Verhältnis von (a) zu (b) und (c) erlaubt weiterhin dem Fachmann auf einfache Weise das durchschnittliche Molekulargewicht der erfindungsgemäßen Copolymere über die Größe von n in der allgemeinen Formel (I) zu kontrollieren und je nach den notwendigen Erfordernissen einzustellen. Die Zahl n in Formel (I) sollte dabei mindestens 1 sein, um zu erfindungsgemäßen Copolymeren mit den entsprechenden Eigenschaften zu gelangen. Es ist bevorzugt, n gezielt einzustellen, da die Viskosität und das durchschnittliche Molekulargewicht mit steigenden Werten für n und bei gleicher Größe der Einheiten A, B und C in der allgemeinen Formel (I) zunimmt. Um eine leichte Anwendung der erfindungsgemäßen Copolymere zu erlauben, sind Copolymere der allgemeinen Formel (I) mit einem Wert für n von 1 bis 20 besonders bevorzugt. Es ist ein besonderer Vorteil des erfindungsgemäßen Herstellungsverfahrens das durchschnittliche Molgewicht der erfindungsgemäßen Copolymere über die einfache Einstellung eines gewünschten Verhältnisses der Ausgangsstoffe kontrollieren zu können.

Die Temperaturen während der Herstellung der erfindungsgemäßen Copolymere betragen bis zu 200°C. Temperaturen von 50 bis 120°C sind bevorzugt. Die Reaktionszeit beträgt zwischen 1 min und 20 h. Der Umsetzgrad kann an der Menge des basisch abspaltbaren Wasserstoffs von nicht umgesetzten Si-H-Gruppen bestimmt werden, dabei ist die Umsetzung abgeschlossen, wenn kein abgespaltener Wasserstoff mehr nachweisbar ist.

Es ist möglich, daß bei der Herstellung der erfindungsgemäßen linearen Polyether-Polysiloxan-Copolymere geringe Anteile an Copolymeren, bei denen in der allgemeinen Formel (I) die Gruppierung A Wasserstoff, Hydroxy oder ein Alkenylrest ist, als Nebenprodukt bzw. bei nicht vollständiger Umsetzung gebildet werden und somit in den erfindungsgemäßen Copolymeren enthalten sind. Diese, vor allem bei der technischen Synthese anfallenden Nebenprodukte stören jedoch bei einer späteren Verwendung nicht.

Ein weiterer Gegenstand der Erfindung ist die Verwendung der erfindungsgemäßen linearen Polyether-Polysiloxan-Copolymere als Schaumstabilisatoren, Entschäumer und/oder in entschäumend wirkenden Formulierungen, als Additive für lösemittelhaltige, lösemittelarme und lösemittelfreie, wäßrige Beschichtungen, Bauchemikalien, Pasten und anderen Zubereitungen, und/oder als Emulsionsstabilisatoren.

Die Auswahl der Edukte und das Verhältnis des Polysiloxans zu den Polyethern sowie das Molekulargewicht der erhaltenen Copolymere entscheiden über die bevorzugte Anwendung.

Die erfindungsgemäßen Copolymere können als Schaumstabilisatoren zur Herstellung von Polymerschäumen, wie beispielsweise PUR-Schaumstoffen, eingesetzt werden. Die Herstellung der Schaumstoffe erfolgt dabei nach bekannten Methoden, wobei der Mischung aus üblicherweise Polyolkomponente, Isocyanat, Katalysator und Treibmittel vorzugsweise 0,01 bis 8 Gew.-% des erfindungsgemäßen Copolymers zugesetzt wird.

Weiterhin können die erfindungsgemäßen Copolymere als Entschäumer oder in entschäumend wirkendenen Formulierungen eingesetzt werden und dabei als Emulsionsstabilisator, als Entlüftungsmittel und als Entschäumeröl wirken. Hierbei sind die Auswahl der Edukte und das Polysiloxan-Polyether-Verhältnis bestimmend für die bevorzugte Anwendungsmöglichkeit der Copolymere.

Bei einer Verwendung als Entschaumerol können weitere bekannte Hilfsstoffe hinzugefügt werden, wie beispielsweise Metalloxide, wie z. B. $SiO_2$ und $Al_2O_3$, Metallseifen, wie z. B. Aluminiumstearat, hochdisperse Kieselsäure oder weitere als Entschäumeröle wirksame Substanzen, wie z. B. Mineralöle, Paraffinöle, Siliconöle, Fettsäureester und Fettalkohole in Mengen von 1 bis 99%, bezogen auf das Gesamtgewicht der Formulierung, zugesetzt werden. Besonders bevorzugt ist die Anwendung derartiger Entschäumerformulierungen in verdünnter Form, z. B. als O/W-Emulsion. Dies kann durch Verdünnen mit geeigneten Lösemitteln, wie z.B. Butyldiglykol, Isopropanol, Ethylenglykol, Propylenglycol, Xylol, Toluen, höhersiedende aromatische und/oder aliphatische Erdöldestillationsfraktionen oder Butylacetat, sowie durch Zugabe bekannter anionischer, kationischer oder nichtionogener Emulgatoren, weiterer bekannter Zusätze und Wasser erfolgen. Die gebrauchsfertigen Lösungen haben im allgemeinen einen Gehalt an erfindungsgemäßen Copolymere von 0,1 bis 95 Gew.-%, bevorzugt von 1 bis 45 Gew.-%. Bevorzugt sind Verdünnungen oder Emulsionen mit einem Gehalt an erfindungsgemäßen Copolymeren von 2 bis 35 Gew.-%. Die Herstellung der Entschäumeremulsionen erfolgt z. B. durch einfaches Verrühren der Bestandteile und anschließendes Homogenisieren mit Rotor-Stator-Homogenisatoren, Kolloidmühlen oder Hochdruckhomogenisatoren.

Entschäumerformulierungen, die die erfindungsgemäßen Copolymere enthalten, sind unter anderem geeignet für die Anwendung in Wasch- und Reinigungsmitteln, zur Bekämpfung von Schaum in Abwasseranlagen, in der Zellstoffherstellung und Papierverarbeitung, in Textilfärbeverfahren und in der Erdgaswäsche. Die erfindungsgemäßen Copolymere werden dabei in Mengen von wenigen ppm bis zu 5 Gew.-% dem zu entschäumenden Medium zugesetzt.

Die erfindungsgemäßen Copolymere finden weiterhin Anwendung als Additive in lösemittelbasierenden, lösemittelhaltigen und lösemittelfreien Lacken, Dispersionen, Bauchemikalien und Pasten. Durch die richtige Auswahl der Edukte ist es hier ebenfalls möglich, gezielt Additive herzustellen. Die Anzahl der Diorganosiloxyeinheiten d in der allgemeinen Formel (III) sollte bei dieser Anwendung bevorzugt bei 2 bis 80, in wasserbasierenden Lacksystemen bevorzugt bei 3 bis 50 betragen. Für diesen Anwendungszweck können die erfindungsgemäßen Copolymere sowohl in reiner als auch in verdünnter Form wie oben beschrieben eingesetzt werden. Die erfindungsgemäßen Copolymere werden dabei in Mengen von wenigen ppm bis zu 5 Gew.-%, bevorzugt von 0,01 bis 4 Gew.-%, insbesondere bevorzugt von 0,05 bis 2 Gew.-% dem Beschichtungssystem zugesetzt.

Eine weitere Anwendung der erfindungsgemäßen Copolymere ist die Stabilisierung von Emulsionen. Die erfindungsgemäßen Copolymere werden hierbei in Mengen von 0,05 bis 20 Gew.-%, bezogen auf die Gesamtmenge der Emulsion, bevorzugt in Mengen von 0,5 bis 10 Gew.-% eingesetzt.

Es kann festgestellt werden, daß die erfindungsgemäßen linearen Polyether-Polysiloxan-Copolymere, welche problemlos nach dem beanspruchten Verfahren hergestellt werden können, auch bei Anwesenheit von Verbindungen mit freien Wasserstoffatomen stabil sind und ausgezeichnet als Schaumstabilisatoren, Entschäumer und/oder in entschäumend wirkenden Formulierungen, als Additive für lösemittelhaltige, lösemittelarme und lösemittelfreie wäßrige Beschichtungen, Bauchemikalien, Pasten und anderen Zubereitungen, und/oder als Emulsionsstabilisatoren einsetzbar sind.

## Ausführungsbeispiele

Alle im Folgenden angegebenen Teile und Prozentsätze sind auf das Gewicht bezogen. Die Viskositäten wurden bei 25°C mittels Rotationsviskosimeter gemessen, sofern nichts anderes angegeben wurde.

## I. Herstellungsbeispiele

Die in den folgenden Beispielen hergestellten erfindungsgemäßen linearen Polyether-Polysiloxan-Copolymere entsprechen der allgemeinen Formel

$$A(BC)_nBA \qquad (I)$$

und werden erhalten durch Umsetzung von

(a) Polyethern mit einer $R^1$- und einer Allyl-Endgruppe der allgemeinen Formel

$$R^1\text{-O-}[CH_2CH_2O]_a[CH_2CH(CH_3)O]_b[CH_2CH(CH_2CH_3)O]_c\text{-CH}_2CHCH_2 \qquad (VIII),$$

(b) Diorganopolysiloxanen mit SiH-Endgruppen der allgemeinen Formel

$$H\text{-}[(CH_3)_2Si\text{-O}]_d\text{-}(CH_3)_2Si\text{-H} \qquad (IX)$$

und

(c) Polyethern mit Allyl-Endgruppen der allgemeinen Formel

$$CH_2CHCH_2\text{-O-}[CH_2CH_2O]_a[CH_2CH(CH_3)O]_b[CH_2CH(CH_2CH_3)O]_c\text{-CH}_2CHCH_2 \qquad (X),$$

in Gegenwart eines Platin-Katalysators bei erhöhten Temperaturen.

Herstellungsbeispiele H1 bis H 11

Die in Tabelle 1 angegebenen Mengen Polyether (a) und (c) (allgemeine Formeln VIII und X) wurden mit Toluen zu einer 50 %igen Lösung verdünnt, anschließend zum Rückfluß erwärmt und vorhandenes Wasser azeotrop abgetrennt. Zu dieser Lösung wurden dann die in Tabelle 1 angegebenen Mengen eines $\alpha,\omega$-SiH-terminierten Dimethylpolysiloxans (b) der Kettenlänge d, gelöst in 50 ml Toluen, gegeben und nach Abkühlen der Mischung auf 90°C erfolgte die Zugabe einer 0,01m Lösung von $H_2PtCl_6$ in i-Propanol, wobei der Gehalt an Platin, bezogen auf das Gewicht der Einsatzstoffe, 8 ppm betrug. Nach Zugabe dieser Katalysatorlösung wurde eine Stunde auf Rückfluß erhitzt und danach das Lösemittel abdestilliert. Die Zusammensetzung der Reaktionsprodukte entsprach der allgemeinen Formel (I) [A(BC)$_n$BA], der Wert für n sowie die Viskosität des Produktes sind in Tabelle 1 zusammengestellt. Im Endprodukt war kein basisch abspaltbarer Wasserstoff nachweisbar.

Herstellungsbeispiele H 12 und H 13

Es wurden die in Tabelle 1 angegebenen Mengen Polyether (a) und (c) sowie $\alpha,\omega$-SiH-terminierten Dimethyl-

polysiloxans der Kettenlänge d vorgelegt und mit einer 0,01m Lösung von $H_2PtCl_6$ in i-Propanol gemischt, wobei der Gehalt an Platin, bezogen auf das Gewicht der Einsatzstoffe, 8 ppm betrug. Die Mischung wurden unter Rühren für 20 h bei einer Temperatur von 50°C gehalten. Die Zusammensetzung der Reaktionsprodukte entsprach der allgemeinen Formel (I) [A(BC)$_n$BA], der Wert für n sowie die Viskosität des Produktes sind in Tabelle 1 zusammengestellt. Im Endprodukt war kein basisch abspaltbarer Wasserstoff nachweisbar.

Tabelle 1

| Bei-spiel/Co polymer | Polyether (a) | | | | | Siloxan (b) | | Polyether (c) | | | | | Endprodukt |
|---|---|---|---|---|---|---|---|---|---|---|---|---|---|
| | Menge in g | $R^1$ | a | b | c | Menge in g | d | Menge in g | a | b | c | n | Viskosität in mPas |
| H1 / CP1 | 33,7 | $C_4H_9$- | 25 | 25 | 0 | 7,7 | 10 | 25,6 | 0 | 70 | 0 | 1 | 1 480 |
| H2 / CP3 | 33,7 | C4H$_9$- | 25 | 25 | 0 | 20 | 25 | 46,25 | 0 | 120 | 0 | 1 | 4 770 |
| H3 / CP3 | 62,2 | HO- | 25 | 25 | 0 | 30 | 10 | 154,2 | 0 | 120 | 0 | 1 | 4 580 |
| H4 / CP4 | 23 | $C_4H_9$- | 25 | 25 | 0 | 15 | 10 | 64 | 0 | 70 | 0 | 3 | 2 120 |
| H5 / CP5 | 9,2 | HO- | 9 | 0 | 0 | 104 | 7 | 109,5 | 12 | 0 | 0 | 17 | 15 700 |
| H6 / CP6 | 10,3 | HO- | 0 | 16 | 0 | 15 | 10 | 64,1 | 0 | 70 | 0 | 3 | 3 250 |
| H7 / CP7 | 30,3 | $C_4H_9$- | 16 | 12 | 0 | 56 | 10 | 123 | 19 | 19 | 0 | 6 | 26 300 |
| H8 / CP8 | 20,6 | HO- | 0 | 16 | 0 | 53,2 | 51 | 77,1 | 0 | 120 | 0 | 1 | 6 700 |
| H9 / CP9 | 4,9 | HO- | 0 | 16 | 0 | 85,1 | 230 | 17,7 | 0 | 120 | 0 | 1 | 45 400 |
| H10 / CP10 | 5,7 | $C_4H_9$- | 0 | 0 | 10 | 10,8 | 10 | 41,8 | 0 | 70 | 0 | 3 | 3 970 |
| H11 / CP11 | 20,0 | HO- | 0 | 16 | 0 | 77 | 51 | 33,7 | 0 | 25 | 25 | 1 | 2 900 |
| H12 / CP12 | 20,6 | HO- | 0 | 16 | 0 | 53,2 | 51 | 77,1 | 0 | 120 | 0 | 1 | 6 100 |
| H13 / CP13 | 33,7 | $C_4H_9$- | 25 | 25 | 0 | 7,7 | 10 | 25,6 | 0 | 70 | 0 | 1 | 1 370 |

## II. Anwendungsbeispiele

Herstellung der Formulierung F1

38,0 g des Copolymers CP2 wurden mit 2 g einer vorhydrophobierten, kommerziell erhältlichen Kieselsäure, charakterisiert durch eine BET-Oberfläche von 200 m$^2$/g, gemischt und dann für eine Stunde mit einer Dissolverscheibe dispergiert.

Herstellung der Formulierung F2

114 g des Copolymers CP3 wurden mit 6 g einer vorhydrophobierten, kommerziell erhältlichen Kieselsäure, charakterisiert durch eine BET-Oberfläche von 200 $m^2$/g, gemischt und dann für eine Stunde mit einer Dissolverscheibe dispergiert.

Herstellung der Formulierung F3

In 40 Teilen Wasser wurden unter Erwärmen 2 Teile Sorbitanstearat und 1 Teil Polyoxyethylensorbitanstearat gelöst. Unter Rühren wurden 10 Teile der Formulierung F2 zugegeben. Nach 10 min Rühren wurden langsam weitere 46,8 Teile Wasser und 0,2 Teile eines Konservierungsmittels eingemischt. Die Homogenisierung der Mischung erfolgte durch Mahlen in einer Kolloidmühle.

Herstellung der Formulierung F4

10 g des Copolymeren CP3 wurden in 90 g Ethylenglycolmonobutylester gelöst.
Die gemäß den Herstellungsbeispielen H1 bis H3 hergestellten Copolymere CP1 bis CP3 sowie die Formulierungen F1 bis F4 wurden in verschiedenen Anwendungen auf ihre Eignung getestet.

Verwendung als Schaumstabilisator für Polyurethanschaum

Copolymer CP1 wurde auf seine Wirksamkeit hinsichtlich Steighöhe und Zelligkeit in einem kommerziellen, 141b (HFKW)-getriebenen Hartschaumsystem und hinsichtlich Steighöhe und Luftdurchlässigkeit in einem kommerziellen, $CO_2$-getriebenen Weichschaumsystem untersucht. Zum Vergleich mit dem erfindungsgemäßen Copolymeren CP1 wurde ein nichterfindungsgemäßes Copolymer V1 verwendet, das wie folgt hergestellt wurde: 195 g eines getrockneten Allylpolyethers der durchschnittlichen Formel $CH_2=CH-CH_2-(O-CH_2-CH_2)_{18}-(0-CH_2-CH(CH_3))_{12}-O-(CH_2)_3CH_3$ und 250 ml Toluol wurden vorgelegt, auf 90 °C erwärmt, mit $N_2$ beschleiert und 58 g des Polyorganosiloxans $(CH_3)_3SiO[Si(CH_3)(H)O]_{7.2}[Si(CH_3)_2O]_{43}Si(CH_3)_3$ sowie 6 ppm Platin in Form einer 0,01-molaren Lösung von $H_2PtCl_6$ in Isopropanol schnell zugegeben. Die exotherme Reaktion führte zu einer Temperaturerhöhung um 10 °C und das trübe Gemisch klarte nach 60 sec. auf. Zur Vervollständigung der Reaktion wurde noch 1 h bei 105 °C nachreagiert und danach das Toluol im Vakuum abdestilliert. Erhalten wurde ein polyethermodifiziertes Polysiloxan, welches eine klare, nur in großer Schichtdicke schwach gelb gefärbte Flüssigkeit mit einer Viskosität von 760 mPas darstellte.
Die Ergebnisse sind in Tabelle 2 dargestellt.

Tabelle 2

| | erfindungsgemäßes Copolymer CP1 | Vergleichscopolymer V1 |
|---|---|---|
| **Hartschaumsystem** | | |
| Teile Copolymer auf 100 Teile Polyol | 1,5 | 1,5 |
| Verschäumungstemperatur (°C) | 40 | 40 |
| Fließlänge des Schaumkörpers (cm) | 160 | 158 |
| Zelligkeit | feinporig, gleichmäßig | feinporig,gleichmäßig |
| **Weichschaumsystem** | | |
| Raumgewicht des Systems (kg/m$^3$) | 30 | 30 |
| Teile Copolymer auf 100 Teile Polyol | 0,3 | 0,3 |
| relative Höhe, bezogen auf V1 (%) | 102 | 100 |
| relative Luftdurchlässigkeit, bezogen auf V1(%) | 101 | 100 |

Das erfindungsgemäße Copolymer CP1 zeigt gegenüber dem Vergleichscopolymer V1 erhebliche Vorteile im verwendeten Hartschaum- und Weichschaumsystem.

Verwendung als Entschäumer in Acrylatdispersionen

Zur Testung der Wirksamkeit der erfindungsgemäßen Copolymere als Entschäumerbestandteile wurden die Formulierungen F1 bis F4 herangezogen. Zum Vergleich wurde ein kommerziell erhältlicher Entschäumer V2 (8 bis 10%ige Lösung eines SiOC-verknüpften Organopolysiloxan-Polyoxyalkylen-Blockmischpolymerisats in Ethylenglycolmonobutylether) verwendet.

Anwendungsversuch 1:

50 g einer Acrylatdispersion (Neocryl XK90) sowie die in Tabelle 3 angegebene Entschäumermenge wurden in eine Flasche eingewogen und anschließend 1 min von Hand kräftig geschüttelt und die Schaumhöhe gemessen. Die entschäumerhaltige Acrylatdispersion wurde dann für 30 Tage gelagert und anschließend die Schaumhöhe nach 1 min Schütteln erneut ermittelt. Anschließend wurde zur Prüfung des Lacks auf Oberflächenstörungen ein 60 μm starker Film auf eine gereinigte Glasoberfläche aufgebracht.

Die Ergebnisse sind in Tabelle 3 zusammengefaßt.

Tabelle 3

| Entschäumer | Konzentration | Schaumhöhe ohne Lagerung in mm | Schaumhöhe nach 30 d Lagerung in mm | Oberflächenstörungen |
|---|---|---|---|---|
| ohne | 0 | 18 | 18 | Luftblasen |
| F1 | 0,2% | 1 | 1 | keine |
| F2 | 0,2% | 1 | 1 | keine |
| F3 | 0,2% | 1 | 0 | keine |
| F4 | 0,2% | 1 | 1 | keine |
| V2 | 0,2% | 2 | 4 | Orangenschaleneffekt |

Anwendungsversuch 2:

Die Acrylatdispersionen wurden analog Anwendungsversuch 1 hergestellt, mit dem Unterschied, daß die Dispersionen mit jeweils 75 g deionisiertem Wasser unter langsamen Rühren verdünnt und anschließend in einem Meßzylinder mit Hilfe eines schnellaufende Rührwerks (Dispermat) und einer, ca. 1 cm über dem Zylinderboden angeordneten kleinen Dissolverscheibe 3 Minuten mit 5000 U/min gerührt wurden. Gemessen wurde die Schaumhöhe 15 s nach Stillstand des Dissolvers. Die Acrylatdispersion wurde 30 Tage gelagert und die Schaumhöhe nach 3 Minuten Rühren bei 5000 U/min erneut gemessen.

Die Prüfung auf Oberflächenstörungen erfolgte, analog Anwendungsversuch 1, anhand eines 60 μm starken Filmes auf einer gereinigten Glasoberfläche.

Die Ergebnisse sind in Tabelle 4 zusammengefaßt.

Tabelle 4

| Entschäumer | Schaumhöhe ohne Lagerung in mm | Schaumhöhe nach 30 d Lagerung in mm | Oberflächenstörungen |
|---|---|---|---|
| ohne | 170 | 169 | Luftblasen |
| F1 | 5 | 4 | keine |
| F2 | 8 | 4 | keine |
| F3 | 1 | 1 | keine |
| F4 | 5 | 3 | keine |
| V2 | 48 | 65 | kleine Krater |

Die erfindungsgemäßen Copolymere und daraus hergestellte Formulierungen zeigen in der Verwendung als Entschäumer ausgezeichnete Eigenschaften und weisen deutliche Vorteile gegenüber der Vergleichsformulierungen auf.

Verwendung als Verlaufsmittel in Acrylatbeschichtungen

Im Anwendungsversuch 1( Anwendung als Entschäumer in Acrylatdispersionen) wies die den Vergleichsentschäumer V2 enthaltende Acrylatdispersion bei der Prüfung auf Oberflächenstörungen einen deutlichen Orangenschaleneffekt auf.

Der Anwendungsversuch 1 wurde nun wiederholt, mit der Abänderung, daß zum Vergleichsentschäumer V2 zusätzlich 0,1 % des erfindungsgemäßen Copolymers CP1, bezogen auf die Gesamtmenge der Acrylatdispersion, zugesetzt wurden. Die ermittelten Schaumhöhen betrugen, analog Anwendungsversuch 1, ohne Lagerung 2 mm sowie nach 30 d Lagerung 4 mm, bei der Prüfung auf Oberflächenstörungen wurde jedoch kein Orangenschaleneffekt beobachtet.

Die erfindungsgemäßen Copolymere sind geeignet, als Additive die Oberflächeneigenschaften von Lackformulierungen und Beschichtungen positiv zu beeinflussen.

Verwendung als Entschäumer in Tensidlösungen

40 g einer 10 %igen Lösung von Polyvinylalkohol (Verseifungsgrad 88%) und 160 g deionisiertes Wasser wurden in einem Becherglas gemischt, wobei die entstehende Lösung eine Viskosität von 26 mPas aufwies. Mit Hilfe zweier gegenläufiger Rührer (600 U/min) wurde für 90 s aufgeschäumt. In die Lösung wurden 10 mg der das erfindungsgemäße Copolymer CP3 enthaltenden Formulierung F2 im Form einer 10 %igen Lösung in Methylethylketon gegeben. Es wurde 90 s aufgerührt und die Soforthöhe $H_0$ sowie anschließend die Schaumhöhen im Abstand von einer Minute bis zum Ende der Messung nach 10 min (H1, H2, H3, ....) bzw. bis zum Erscheinen von freier Flüssigkeitsoberfläche gemessen.

Die prozentuale Entschäumung (%E) wird berechnet: %E = (1 - I/BW) x 100

$$I_1 = (H_0 + H_1 + H_2 + ....... + H_{10}) \times 2$$

$$I_2 = I_1 - H_0 - H_0$$

$$I = I_2 / 2 H_0$$

BW = I ohne Entschäumerzusatz

Die erreichte prozentuale Entschäumung bei Verwendung der Formulierung F2 betrug 99%.

Zum Vergleich wurde die Entschäumung mit einem kommerziell verfügbaren Entschäumer auf Basis von Polydimethylsiloxan, in welches analog der Formulierung F2 vorhydrophobierte Kieselsäure einer BET-Oberfläche von 200 $m^2$/g eindispergiert wurden, durchgeführt. Mit dieser Entschäumerformulierung wurde nur eine prozentuale Entschäumung von 61% erreicht.

Die erfindungsgemäßen Copolymere sind hervorragend für den Einsatz zur Entschäumung stark schäumender wäßriger Tensidlösungen geeignet.

Verwendung als Entschäumer einer Waschlauge zur Textilvorbehandlung

Aus einem festen, einen Entschäumergehalt von 0,3% aufweisenden Waschmittel wurde ein Flüssigkonzentrat durch Auflösen von 120 g des Waschmittels in 1200 ml Wasser bei 40°C unter langsamen Rühren hergestellt. Dieses Flüssigkonzentrat wurde eine Woche bei 2 °C in einem Standzylinder mit einem Ablaßhahn am unteren Ende gelagert, wobei während der Lagerzeit der Entschäumer möglichst nicht aus der Waschlauge separieren und danach die Lösung bei der Anwendung sicher entschäumen sollte.

Zur Prüfung wurden die unteren 400 ml der angesetzten Waschlauge entnommen und in einem Becherglas auf einer Heizplatte 30 min bei 600 min$^{-1}$ mit einem Käfigrührer gerührt. Dabei stieg die Temperatur von 25°C auf 60°C an. Die Höhe des gebildeten Schaums wurde Intervallen von 10 Sekunden gemessen und aus den Meßwerten das Schaumhöhenintegral H über die Gesamtzeit als dimensionslose Zahl errechnet. Das Schaumhöhenintegral H gibt die Menge des während des Tests gebildeten Schaums wieder.

Getestet wurden die das erfindungsgemäße Copolymer CP3 enthaltende Formulierung F2 sowie als Vergleich ein Entschäumer (V3) auf Basis von Polydimethylsiloxan, in welches 5% hydrophobierte Fällungskieselsäure mit einer BET-Oberflächen von 200 $m^2$/g eindispergiert wurden.

Die experimentellen Daten enthält Tabelle 5.

Tabelle 5

| Entschäumer | Aussehen der Waschlauge nach 7 d bei 2°C | Schaumhöhenintegral H |
|---|---|---|
| ohne | leicht trübe Lösung | 30,83 |
| F2 | leicht trübe Lösung | 13,02 |
| V3 | Entschäumer separiert als Siliconfilm an der Oberfläche | 28,97 |

Die erfindungsgemäßen Copolymere sind hervorragend als Entschäumer für Textilanwendungen geeignet.

**Patentansprüche**

1. Lineare Polyether-Polysiloxan-Copolymere, in welchen lineare Polyether- und lineare Polysiloxan-Einheiten über Si-C-Bindungen verknüpft sind und die der allgemeinen Formel

$$A(BC)_nBA \qquad (I),$$

entsprechen, in welcher $n \geq 1$ ist und
A eine Gruppierung der allgemeinen Formel

$$R^1\text{-O-}[CH_2CH_2O]_a[CH_2CH(CH_3)O]_b[CH_2CH(CH_2CH_3)O]_c\text{-}(C_mH_{2m})\text{-} \qquad (II),$$

wobei $R^1$ unabhängig voneinander entweder Wasserstoff, Alkyl, Aralkyl, Aryl oder ein $R^2\text{-}C(O)$-Rest und $R^2$ ein substituierter oder unsubstituierter Alkylrest mit 1 bis 8 Kohlenwasserstoffatomen ist, m Werte zwischen 3 und 8 annimmt und a, b und c unabhängig voneinander Werte zwischen 0 und 200 annehmen, mit der Maßgabe, daß die Summe (a+b+c) 2 bis 300 beträgt,
B eine Gruppierung der allgemeinen Formel

$$\text{-}(R^3_2Si\text{-}O)_d\text{-}R^3_2Si\text{-} \qquad (III),$$

wobei $R^3$ unabhängig voneinander substituierte und/oder unsubstituierte, gesättigte und/oder ungesättigte Kohlenwasserstoffreste mit 1 bis 20 Kohlenstoffatomen ist und d Werte zwischen 1 und 400 annimmt,
und C ein Gruppierung der allgemeinen Formel

$$\text{-}(C_mH_{2m})\text{-O-}[CH_2CH_2O]_a[CH_2CH(CH_3)O]_b[CH_2CH(CH_2CH_3)O]_c\text{-}(C_mH_{2m})\text{-} \qquad (IV),$$

wobei m, a, b, und c die oben angegebenen Werte aufweisen, bedeuten.

2. Polyether-Polysiloxan-Copolymere nach Anspruch 1, dadurch gekennzeichnet, daß in der allgemeinen Formel (I) n Werte zwischen 1 und 20 annimmt.

3. Polyether-Polysiloxan-Copolymere nach Anspruch 1, dadurch gekennzeichnet, daß in der allgemeinen Formel (II) m Werte zwischen 3 und 6, a und b Werte zwischen 0 und 40 sowie c Werte zwischen 0 und 30 mit der Maßgabe annehmen, daß die Summe (a+b+c) 2 bis 60 beträgt.

4. Polyether-Polysiloxan-Copolymere nach Anspruch 1, dadurch gekennzeichnet, daß in der allgemeinen Formel (II) der Rest $R^1$ Wasserstoff, ein Alkylrest mit 1 bis 4 Kohlenstoffatomen und/oder ein Acetylrest ist.

5. Polyether-Polysiloxan-Copolymere nach Anspruch 1, dadurch gekennzeichnet, daß in der allgemeinen Formel (III) die Reste $R^3$ einwertige gesättigte, substituierte und/oder unsubstituierte Kohlenwasserstoffreste mit 1 bis 6 Kohlenstoffatomen darstellen.

6. Polyether-Polysiloxan-Copolymere nach Anspruch 1, dadurch gekennzeichnet, daß in der allgemeinen Formel (III) die Reste $R^3$ gesättigte oder ungesättigte, substituierte und/oder unsubstituierte cyclische Kohlenwasserstoffreste und/oder Arylreste darstellen.

7. Polyether-Polysiloxan-Copolymere nach Anspruch 1, dadurch gekennzeichnet, daß in der allgemeinen Formel (IV) m Werte zwischen 3 und 6, a und b Werte zwischen 0 und 120 sowie c Werte zwischen 0 und 30 annehmen, mit der Maßgabe daß die Summe (a+b+c) 2 bis 120 beträgt.

8. Herstellung der Polyether-Potysiloxan-Copolymere nach Anspruch 1 durch Umsetzung von

    (a) Polyethern mit einer $R^1$- und einer Alkenyl-Endgruppe der allgemeinen Formel

$$R^1\text{-O-}[CH_2CH_2O]_a[CH_2CH(CH_3)O]_b[CH_2CH(CH_2CH_3)O]_c\text{-}(C_mH_{2m-1}) \quad\quad (V),$$

    (b) Diorganopolysiloxanen mit SiH-Endgruppen der allgemeinen Formel

$$H\text{-}(R^3_2Si\text{-}O)_d\text{-}R^3_2Si\text{-}H \quad (VI)$$

    und
    (c) Polyethern mit Alkenyl-Endgruppen der allgemeinen Formel

$$(C_mH_{2m-1})\text{-O-}[CH_2CH_2O]_a[CH_2CH(CH_3)O]_b[CH_2CH(CH_2CH_3)O]_c\text{-}(C_mH_{2m-1}) \quad\quad (VII),$$

    wobei $R^1$, $R^3$, a, b, c, d und m die oben angegebene Bedeutung aufweisen, in Gegenwart einer Hydrosilylierungsreaktionen katalysierenden Verbindung (d) bei Temperaturen von 20 bis 300°C.

9. Herstellung nach Anspruch 8, dadurch gekennzeichnet, daß als Hydrosilylierungsreaktionen katalysierende Verbindung (d) Komplexe oder Verbindungen von Metallen der 8. Nebengruppe des Periodensystems der Elemente eingesetzt werden.

10. Herstellung nach Anspruch 8, dadurch gekennzeichnet, daß die Umsetzung in Gegenwart von aprotischen Lösemitteln erfolgt.

11. Verwendung der Polyether-Polysiloxan-Copolymere nach Anspruch 1 als Schaumstabilisatoren.

12. Verwendung der Polyether-Polysiloxan-Copolymere nach Anspruch 1 als Entschäumer oder in entschäumend wirkenden Formulierungen

13. Verwendung der Polyether-Polysiloxan-Copolymere nach Anspruch 1 in wäßrigen Zubereitungen oder als Emulsion.

## Europäisches Patentamt

# EUROPÄISCHER RECHERCHENBERICHT

Nummer der Anmeldung

EP 99 11 4288

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | EP 0 492 657 A (NIPPON UNICAR COMPANY LIMITED) 1. Juli 1992 (1992-07-01)<br>* Seite 2, Zeile 1 - Zeile 5 *<br>* Seite 2, Zeile 25 - Zeile 31 *<br>* Beispiele 1-5,7 *<br>--- | 1-13 | C08G77/46 |
| Y | EP 0 785 240 A (GOLDSCHMIDT) 23. Juli 1997 (1997-07-23)<br>* Seite 2, Zeile 3 - Zeile 6 *<br>* Seite 3, Formel *<br>* Seite 4, Formeln *<br>* Seite 5, Zeile 2 - Zeile 3 *<br>* Seite 5, Tabelle; Verbindungen 1, 3, 4, 6, 7, 10 *<br>----- | 1-13 | |

**RECHERCHIERTE SACHGEBIETE (Int.Cl.7)**

C08G

Der vorliegende Recherchenbericht wurde für alle Patentansprüche erstellt

| Recherchenort | Abschlußdatum der Recherche | Prüfer |
|---|---|---|
| BERLIN | 20. August 1999 | Hoepfner, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.................................................................

& : Mitglied der gleichen Patentfamilie, übereinstimmendes Dokument

**ANHANG ZUM EUROPÄISCHEN RECHERCHENBERICHT
ÜBER DIE EUROPÄISCHE PATENTANMELDUNG NR.**    EP 99 11 4288

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-08-1999

| Im Recherchenbericht angeführtes Patentdokument | Datum der Veröffentlichung | Mitglied(er) der Patentfamilie | | Datum der Veröffentlichung |
|---|---|---|---|---|
| EP 492657 A | 01-07-1992 | JP | 4211605 A | 03-08-1992 |
| | | JP | 4234307 A | 24-08-1992 |
| | | US | 5472686 A | 05-12-1995 |
| | | AT | 133558 T | 15-02-1996 |
| | | CA | 2058461 A,C | 29-06-1992 |
| | | DE | 69116839 D | 14-03-1996 |
| | | DE | 69116839 T | 04-07-1996 |
| | | US | 5660819 A | 26-08-1992 |
| EP 785240 A | 23-07-1997 | DE | 19602097 A | 24-07-1997 |
| | | AU | 1227197 A | 31-07-1997 |
| | | CA | 2195603 A | 23-07-1997 |
| | | JP | 9194782 A | 29-07-1997 |
| | | US | 5733971 A | 31-03-1998 |

Für nähere Einzelheiten zu diesem Anhang : siehe Amtsblatt des Europäischen Patentamts, Nr.12/82

14